# EUROPEAN PATENT SPECIFICATION

(11) **EP 4 156 620 B1**
(45) Date of publication and mention of the grant of the patent: **19.02.2025**
(21) Application number: 21818480.2
(22) Date of filing: 02.06.2021
(51) Int. Cl.: H04L 65/1089, H04L 65/403, H04L 65/402

(54) **INTERACTION METHOD AND APPARATUS, AND ELECTRONIC DEVICE**
INTERAKTIONSVERFAHREN UND -VORRICHTUNG SOWIE ELEKTRONISCHE VORRICHTUNG
APPAREIL ET PROCÉDÉ D'INTERACTION, ET DISPOSITIF ÉLECTRONIQUE

(30) Priority: 02.06.2020 CN 202010493292
(43) Date of publication of application: 29.03.2023
(73) Proprietor: BEIJING BYTEDANCE NETWORK TECHNOLOGY CO., LTD., Beijing 100041 (CN)
(72) Inventor: LU, Shuhan, Beijing 100190 (CN)
(74) Representative: Dentons UK and Middle East LLP
(86) International application number: PCT/CN2021/097962
(87) International publication number: WO 2021/244577

(56) References cited:
- CN-A- 101 150 537
- CN-A- 108 933 965
- CN-A- 109 905 629
- CN-A- 112 311 754
- US-A1- 2014 067 957
- US-A1- 2014 282 102
- US-A1- 2015 149 929
- US-A1- 2016 094 593
- US-A1- 2016 165 184
- US-A1- 2019 073 490

## Description

### FIELD

The present disclosure relates to the technical field of the Internet, and in particular to an interaction method, an interaction device, an electrical device, and a computer-readable medium.

### BACKGROUND

With the development of the Internet, more and more users use the functions of terminal devices, which makes work and life more convenient. For example, a user may start a multimedia conference with other users online through a terminal device. Through an online multimedia conference between users, long-distance interaction can be realized, and the users can start a conference without having to all stay in one place. With the multimedia conference, limitations of a traditional face-to-face conference on location and venue can be largely avoided.

US 2016/094593 discloses sharing the contents of a presentation in a web conference through automated identification of documents for selective sharing with web conferences comprises launching a web conference in which an application or an entire desktop view of a conference presenter is caused to be rendered as content viewable on the displays of all conference participants. The method detects that one or more documents are being accessed by application(s) executed concurrently with the desktop sharing application and identifies documents having a supported format as including viewable content available for rendering to the display of the presenter. Automatically, or after presenter confirmation, the content is uploaded to a web server and converted into a format that can be distributed to and cached at the respective participant computers.

US 2014/067957 discloses An information processing apparatus that communicates with a terminal device using a first communication manner, the information processing apparatus includes a processor that: generates a response including first information being described in a first format in response to a request from the terminal device; converts the first information being included in the response and being described in the first format into second information described in a second format conforming to the first communication manner; and transmits the response including the second information to the terminal device in the first communication manner.

### SUMMARY

The invention is defined by the independent claims. Further embodiments of the invention are defined by the dependent claims.

### BRIEF DESCRIPTION OF THE DRAWINGS

The above and other features, advantages and aspects of the embodiments of the present disclosure will become more apparent with reference to the following detailed description in conjunction with the drawings. Throughout the drawings, the same or similar reference numbers refer to the same or similar elements. It should be understood that the drawings are schematic and that the components and elements are not necessarily drawn to scale.
Figure 1 is a flowchart of an interaction method according to an embodiment of the present disclosure;
Figure 2A and Figure 2B are schematic diagrams of an application scenario of the interaction method according to the present disclosure;
Figure 3A and Figure 3B are schematic diagrams of an application scenario of the interaction method according to the present disclosure;
Figure 4 is a schematic diagram of an application scenario of the interaction method according to the present disclosure;
Figure 5 is a schematic diagram of an application scenario of the interaction method according to the present disclosure;
Figure 6A and Figure 6B are schematic diagrams of an application scenario of the interaction method according to the present disclosure;
Figure 7A and Figure 7B are schematic diagrams of an application scenario of the interaction method according to the present disclosure;
Figure 8 is a schematic structural diagram of an interaction device according to an embodiment of the present disclosure
Figure 9 shows an exemplary system architecture in which the interaction method according to an embodiment of the present disclosure may be applied; and
Figure 10 is a schematic diagram of a basic structure of an electronic device according to an embodiment of the present disclosure.

### DETAILED DESCRIPTION OF EMBODIMENTS

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein, but rather are provided for the purpose of more thorough and complete understanding of the present disclosure. It should be understood that the drawings and embodiments of the present disclosure are only for exemplary purposes, and are not intended to limit the protection scope of the present disclosure.

It should be understood that the various steps described in the method embodiments of the present disclosure may be performed in different orders and/or performed in parallel. Furthermore, method embodiments may include additional steps and/or omit performing the illustrated steps. The scope of the present disclosure is not limited in this regard.

The term "comprising" and variations thereof as used herein are non-inclusive, that is, "including but not limited to". The term "based on" means "based at least in part on." The term "one embodiment" means "at least one embodiment". The term "another embodiment" means "at least one another embodiment". The term "some embodiments" means "at least some embodiments". Related definitions of other terms will be given in the description below.

It should be noted that concepts such as "first" and "second" mentioned in the present disclosure are only used to distinguish different devices, modules or units, and are not used to limit the order or interdependence of functions executed by these devices, modules or units.

It should be noted that the modification of "one" and "multiple" mentioned in the present disclosure is illustrative rather than restrictive, and those skilled in the art should understand that unless the context clearly indicates otherwise, they should be understood as "one or more".

The names of messages or information exchanged between multiple devices in the embodiments of the present disclosure are only used for illustrative purposes, and are not used to limit the scope of these messages or information.

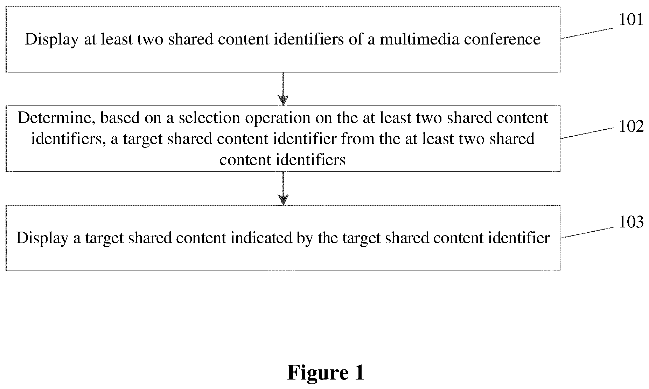

Reference is made to Figure 1, which shows a flow of an interaction method according to an embodiment of the present disclosure. As shown in Figure 1, the interaction method includes the following steps 101 to 103.

In step 101, at least two sharable content identifiers of a multimedia conference are displayed.

In the embodiment, an execution body (for example, a terminal device) of the interaction method may display at least two sharable content identifiers of the multimedia conference.

Here, the multimedia conference may be an online conference conducted in a multimedia manner. The multimedia may include, but is not limited to, at least one of audio and video.

In the embodiment, an application for starting the multimedia conference may be of any type, which is not limited herein. For example, the application may be an instant video conferencing application, a communication application, a video playback application, a mail application, or the like.

Here, a participant of the multimedia conference may upload the sharable content to a server. Here, the sharable content may also be referred to as a shared file.

Here, the participant of the multimedia conference may refer to a client that an attendee logs in with an account.

Here, the sharable content identifier may indicate a content that the participant of the multimedia conference shares during the multimedia conference.

Here, the sharable content identifier may be of various types, which is not limited herein. For example, the sharable content identifier may include, but is not limited to, at least one of a sharable content name and an indication image of the sharable content.

Here, the sharable content may be of various types. For example, the types of sharable content may include, but are not limited to, at least one of the following: documents, tables, presentation documents, thought notes, and the like. It may be understood that the type of sharable content identifier may be different depending on a type of a sharable content. For example, a document-type sharable content may have an identifier of a document name, and a picture-type sharable content may have an identifier of a thumbnail.

Here, the participant may specify a local file or a cloud file in a cloud storage space, as the sharable content of the multimedia conference. Some or all of the participants of the multimedia conference may open a content shared to the multimedia conference for viewing or listening.

In some embodiments, the sharable content indicated by the sharable content identifier includes a cloud file stored in a cloud storage space.

In some application scenarios, the server may acquire the sharable content from the cloud storage space based on the sharable content identifier specified by the participant, or receive the sharable content from a terminal logged in by the participant. Then, the server may bind the acquired or received sharable content to the multimedia conference, that is, to bind the sharable content identifier to an identifier of the multimedia conference. Thus, the server may determine the sharable content identifier bound to identifier of the multimedia conference as the sharable content identifier of the multimedia conference. The server may send the sharable content identifier of the multimedia conference to the participants of the multimedia conference. The participants of the multimedia conference may display the received sharable content identifier.

In some application scenarios, the number of sharable content identifiers displayed by the execution body may be the same as the number of sharable content identifiers of the multimedia conference, or may be smaller than the number of sharable content identifiers of the multimedia conference.

In some application scenarios, the number of sharable content identifiers of the multimedia conference may be one or at least two. It may be understood that if the number of sharable content identifiers of the multimedia conference is one, the participant in the conference may not requires to switch the displayed sharable content.

It may be understood that the number of sharable content identifiers displayed by the execution body may be one or at least two. In the embodiment, when the participant performs a selection operation, the number of the sharable content identifiers displayed by the execution body is at least two. In other words, only in a case that there are at least two sharable content identifiers, the participant in the multimedia conference may switch the displayed sharable content.

In step 102, a target sharable content identifier is determined from the at least two sharable content identifiers based on a selection operation on the at least two sharable content identifiers.

In the embodiment, the execution body may determine the target sharable content identifier from the at least two sharable content identifiers based on the selection operation on the at least two sharable content identifiers.

In the embodiment, the participant of the multimedia conference may perform a selection operation on the sharable content identifiers. The selection operation may be used to select a sharable content identifier from the sharable content identifiers as the target sharable content identifier.

Here, the selection operation may be implemented in various ways, which is not limited herein. For example, the selection operation may be clicking on a sharable content identifier. For example, the selection operation may be dragging a sharable content identifier to a preset area.

In step 103, the target sharable content indicated by the target sharable content identifier is displayed.

In the embodiment, the execution body may display the target sharable content indicated by the target sharable content identifier on a multimedia conference interface. Here, after determining the target sharable content identifier, the execution body may display the target sharable content indicated by the target sharable content identifier.

In some application scenarios, the multimedia conference interface may be an interface on a terminal that initiates the selection operation, or may be interfaces on terminals of all or some of the participants.

In an embodiment, the target sharable content may be displayed in the multimedia conference interface, or the target sharable content may be displayed in another window. For example, a document presentation window may be set outside the multimedia conference interface to display the selected shared document.

It should be noted that, with the interaction method according to the embodiment, at least two sharable content identifiers of the multimedia conference are displayed during the multimedia conference; based on a selection operation on the at least two sharable content identifiers, a target sharable content identifier is determined from the at least two sharable content identifiers; and a target sharable content indicated by the target sharable content identifier is displayed. In this way, an interaction method can be provided, with which a participant can select and display a desired sharable content according to their actual needs during the multimedia conference.

Compared with a manner in which the multimedia conference only has one sharable content, the multimedia conference in the embodiments has at least two sharable contents, which can provide a selection basis for the participants, and can provide more information to the participants, thereby increasing the amount of interaction information during the multimedia conference.

Compared with a case that participants can only watch a document shared by a speaker, the participant in the embodiments can switch to a desired sharable content and display the sharable content by themselves. In this way, when a participant wants to obtain other sharable content, a switching manner can be provided to the participant, which enables the participant to obtain information timely, thereby improving the efficiency of information acquisition by the participant (the participant itself knows what information he most need to obtain at the moment).

It should be noted that, with the interaction method according to the embodiment, the participant of the multimedia conference may actively select and switch among multiple sharable contents that have been shared. In this way, even if the sharable content currently desired to be accessed by the participant is not the sharable content currently being presented in the multimedia conference, the participant may also browse the sharable content.

In some application scenarios, if a participant does not have an actual access authorization to a sharable content A shared during a multimedia conference, with the interaction method according to the embodiment, the participant may still access the sharable content A desired to be accessed by the participant by a selection operation on the sharable content A, even if the sharable content A is not being presented. Here, the authorization set by an owner of the sharable content A that other users (for example, a user A) may access the sharable content A at any time may be understood as the actual access authorization. If the user A does not have the actual access authorization to the sharable content A, but may view the sharable content A during the multimedia conference, the user A has a temporary authorization to the sharable content A.

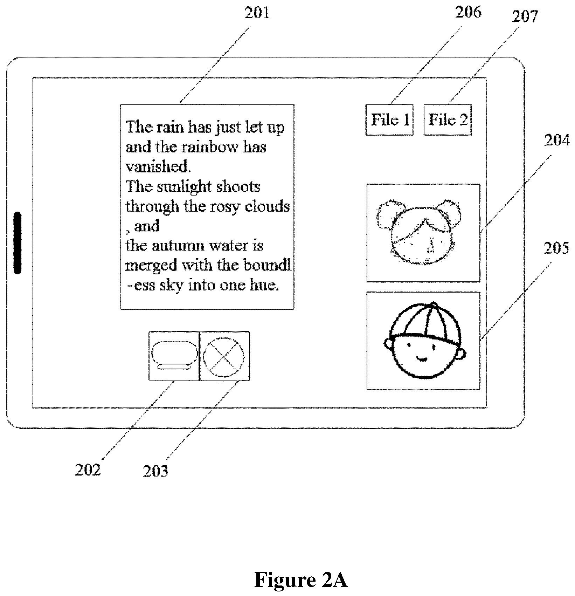

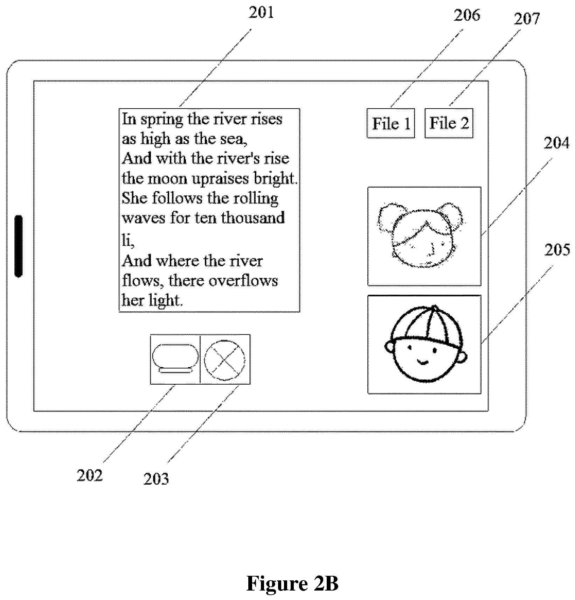

Reference is made to Figure 2A and Figure 2B, which show an exemplary application scenario of the embodiment corresponding to Figure 1. In a display interface of a multimedia conference shown in Figure 2A and 2B, a sharable content display area 201 may be used to display a sharable content, a sharing enabling control 202 may be used to trigger the enabling of content sharing, and a conference ending control 203 may be used to end the conference. A participant video display area 204 may be used to display an image of a first participant, a participant video display area 205 may be used to display an image of a second participant, and a sharable content identifier 206 may be used to indicate a first sharable content of the multimedia conference, that is, a "File 1", a sharable content identifier 207 may be used to indicate a second sharable content of the multimedia conference, that is, a "File 2".

For example, the first sharable content may include an excerpt of "A Tribute to King Teng's Tower", and the second sharable content may include an excerpt of "A Moonlit Night On The Spring River".

First, the participant may click on the sharable content identifier 206 on a screen of a terminal device. As shown in Figure 2A, the sharable content display area 201 may display the content of the File 1 indicated by the sharable content identifier 206.

Then, the participant may click on the sharable content identifier 207 on the screen of the terminal device. As shown in Figure 2B, the sharable content display area 201 may display the corresponding content. In other words, according to the sharable content identifier selected by the user, the content displayed in the sharable content display area 201 is switched from the first sharable content to the second sharable content. It may be seen in conjunction with Figure 2A and Figure 2B, with the change of the sharable content identifier selected by the user, the sharable content displayed by the sharable content display area switches from the excerpt of " A Tribute to King Teng's Tower " to the excerpt of " A Moonlit Night On The Spring River ".

In some embodiments, the cloud file is uploaded from the local terminal of the participant to the cloud storage space by the participant during the multimedia conference.

Here, the participant uploads a local file to the cloud storage space during the multimedia conference. Through the cloud storage space, each participant (with viewing authorization) may be granted a temporary authorization to enable each participation (with viewing authorization) to select the sharable content for watching or listening.

In some embodiments, the sharable content of the multimedia conference is initiated by at least one participant during the multimedia conference. In other words, each participant of the multimedia conference has an authorization to specify a sharable content.

It should be noted that each participant may specify a sharable content, so that each participant may share, with other participants, information he wants to share in time, and other participants may obtain the sharable content shared by other participants in time, so that the efficiency of information interaction between participants can be improved, thereby shortening the time duration of the multimedia conference, thus reducing resources consumed by the multimedia conference.

In some embodiments, the method may further include: displaying an addition prompt information in response to determining a sharable content is newly added during the multimedia conference.

Here, the newly added sharable content of the multimedia conference may be uploaded by the execution body or uploaded by another participant in the multimedia conference. If the newly added sharable content is uploaded by the execution body, the execution body may determine by itself that the sharable content is newly added during the multimedia conference. If the newly added sharable content is uploaded another participant, a server may send a sharable content addition notification to the execution body, so that the execution body may determine that a sharable content is newly added during the multimedia conference.

It should be noted that, by displaying the addition prompt information, the target participant may be informed of the sharable content newly added in the multimedia conference in time, thereby avoiding poor information transmission caused by the target participant being unaware of the newly uploaded sharable content.

In some embodiments, the method may further include: generating an addition prompt control in response to determining that a sharable content is newly added during the multimedia conference and displaying the addition prompt control; and displaying the newly added sharable content in response to detecting a triggering operation on the addition prompt control.

Here, the execution body may generate and display the addition prompt control in response to determining that a sharable content is newly added during the multimedia conference. Then, the user may trigger the addition prompt control, and the execution body displays the newly added sharable content in response to detecting the trigger operation.

Here, the addition prompt control may carry addition prompt information.

It should be noted that, through the addition prompt control, after determining that the sharable content has been newly added during the multimedia conference, the target participant may trigger the addition prompt control to quickly jump to display the newly added sharable content. In this way, the speed of displaying the newly added sharable content can be increased, that is, the speed at which the participant of the multimedia conference obtains information conveyed by the sharable content is increased, thereby improving the smoothness of information interaction during the multimedia conference.

In an embodiment, when the newly added sharable content is displayed, the currently displayed sharable content may be stopped, or the currently displayed sharable content may be displayed together with the newly added sharable content. In an embodiment, the newly added sharable content may be displayed together with the currently displayed sharable content in different ways (for example, displayed in different areas).

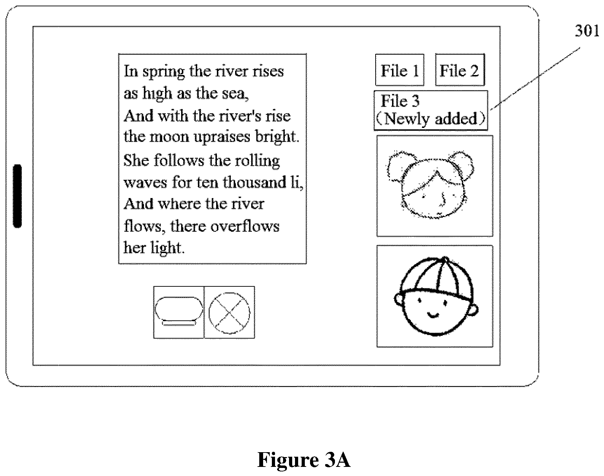

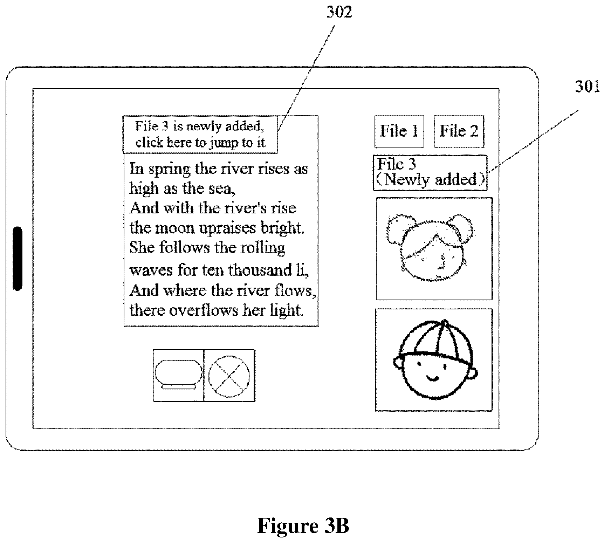

Reference is made to Figure 3A and Figure 3B. Figure 3A and Figure 3B show a scenario in which a shared file is newly added during a multimedia conference. In Figure 3A, a sharable content identifier 301 may be displayed, and an addition prompt information "(newly added)" may be displayed on the sharable content identifier 301. In Figure 3B, the addition prompt control 302 may be displayed, and the user may click on the addition prompt control 302 to jump to display a content of a "File 3".

In some embodiments, a sharable content display area of the execution body may display one sharable content at a time, or display at least two sharable contents in parallel

In some embodiments, the method may further include: stopping, in response to determining that a sharable content is being displayed in a sharable content display area and in response to detecting a selection operation on the sharable content identifiers, displaying the sharable content that is being displayed; and displaying the target sharable content in the sharable content display area.

It should be noted that with the manner of stopping displaying the sharable content that is being displayed and displaying the target sharable content, the sharable content display area may display only one sharable content at a time, which may ensure that the displayed sharable content is more clear and that the user may obtain the most in-demand sharable content currently.

In some embodiments, the method may further include: adding a new sharable content display area in response to determining that a sharable content is being displayed in a sharable content display area and in response to detecting a selection operation on the sharable content identifiers, and displaying the target sharable content in the new sharable content display area. Therefore, the sharable content being displayed can be displayed together with the target sharable content in parallel.

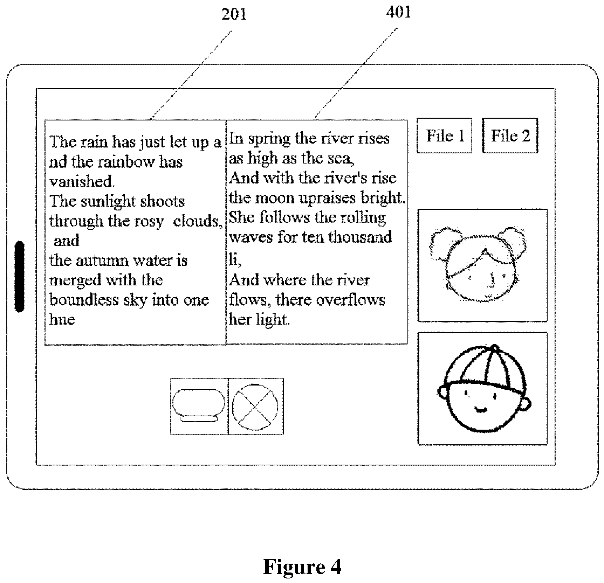

In some application scenarios, reference is made to Figure 4, which shows a scenario in which two contents are displayed in parallel. For the convenience of description, the description may be made continually by taking the example of the scenario shown in Figure 2A. The participant may click on the first sharable content identifier 206, and the sharable content display area 201 may display the content of the first sharable content identifier. Then, the participant may click on the second sharable content identifier 207, and the execution body may add a new sharable content display area 401, and display the second sharable content in the new sharable content display area 401.

It should be noted that by displaying the displayed sharable content and the target sharable content in parallel, the amount of information acquired by the user in parallel may be increased, thereby improving the efficiency of the user for acquiring information.

In some embodiments, the step 101 may include: displaying the sharable content identifiers in response to determining that the number of sharable contents of the multimedia conference is greater than a preset first number threshold.

Here, the first number threshold may be set according to actual situations, which is not limited herein.

For example, the first number threshold may be one.

In some embodiments, the method further includes: displaying a sharable content identifier acquisition control in response to determining that the number of sharable contents of the multimedia conference is greater than a preset second number threshold.

Here, the sharable content identifier acquisition control may be used to acquire a sharable content identifier that is not currently displayed.

Here, the second number threshold may be set according to actual situations, which is not limited herein.

For example, the second number threshold may be four.

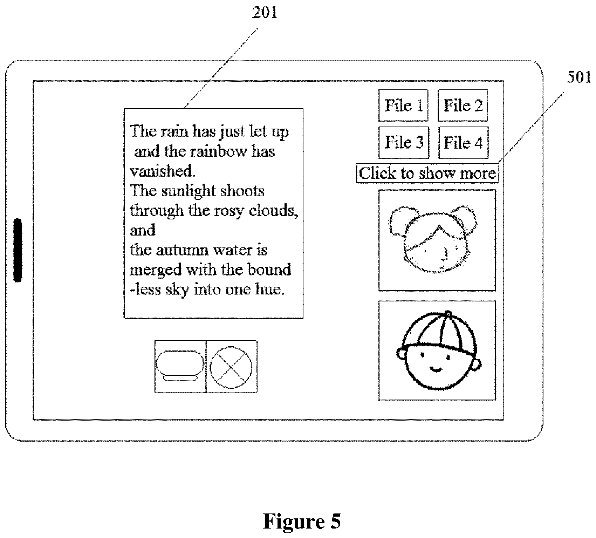

Reference is made to Figure 5, which shows an application scenario in which a sharable content identifier acquisition control is displayed. For the convenience of description, the description may be made continually by taking the example of the scenario shown in Figure 2A. In Figure 5, the number of sharable contents is 5, and the second number threshold is 4, that is, the number of sharable contents is greater than the second number threshold, and the execution body may display the sharable content identifier acquisition control 501. The participant clicks on the sharable content identifier acquisition control, and the execution body may display all the sharable content identifiers at one time. The execution body may also implement page turning to display a "File 5" (not shown) on a second page.

Here, the participant triggers the sharable content identifier acquisition control, to display more sharable content identifiers. Therefore, when there are many sharable contents, the screen area occupied by the sharable content identifiers is reduced, and a way is provided to enable the user to see all the sharable content identifiers.

In some embodiments, the method further includes: determining, based on operation authorization information set by a sharer of the target sharable content, an operation authorization of the participant on the target sharable content after the multimedia conference ends.

Here, the sharer of the target sharable content may be a participant who initiates the content as the sharable content of the multimedia conference.

Here, the sharer may set operation authorization information about the target sharable content after the conference ends for the target sharable content.

Here, the operation authorization may include, but is not limited to, at least one of the following: an open authorization, a download authorization, an editing authorization, a forwarding authorization, and the like.

In an embodiment, the operation authorization information may further include a user scope related to the operation authorization, for example, the user may include a participant group with operation authorization and a participant group without operation authorization.

It should be noted that, by setting the operation authorization information after the conference ends by the sharer, the operation authorization of the target sharable content after the conference ends may be set according to actual needs, thereby improving the confidentiality of the target sharable content, thus avoiding a risk of possible leakage or tampering of the information in the target sharable content.

In some embodiments, the method further includes: displaying, based on the target authorization of the target participant in the multimedia conference, an operation control corresponding to the target authorization on the interface of the target participant.

Here, the target participant who performs the selection operation may be a user identifier logged in by the execution body. For example, when a real human user performs a click operation, the execution body (for example, a terminal device) may determine a user indicated by the current logged-in user identifier as the executor of the click operation. In other words, the execution body may use the current logged-in user identifier as the target participant for performing the selection operation.

In some embodiments, the target authorization is determined by: determining, based on identifier information of the target participant, an authorization matching the identifier information from authorizations of the multimedia conference, as the target authorization.

Here, the identifier information of the target object may be referred to as a user identifier.

Here, an electronic device that determines the target authorization may be a terminal or a server.

In some embodiments, the authorizations of the multimedia conference include at least one of a conference-related authorization and a target shared document-related authorization.

Here, the conference-related authorization includes, but is not limited to, at least one of a conference presentation authorization and a first handover authorization, where the first handover authorization indicates that the conference-related authorization may be handed over.

Here, the target shared document-related authorization includes, but is not limited to, at least one of the following: an editing authorization, an editing authorization modification authorization, and a second handover authorization, where the second handover authorization indicates that the editing authorization modification authorization may be handed over.

For example, the editing authorization may include, but is not limited to, at least one of the following: a read authorization, an editing authorization, a saving authorization, download authorization, and the like.

Here, the execution body may display function controls related to authorizations of the target participant based on the authorizations of the target participant.

It may be understood that the server or the execution body may preset a correlation between the authorizations and the function controls. The execution body may determine the function controls related to the authorizations of the target participant based on the preset correlation.

It should be noted that by enabling different controls based on the authorizations of the target participant, the authorizations of the target sharable content may be distinguished, so that the target sharable content may be displayed while avoiding a risk of possible leakage or tampering of information in the target sharable content.

In some embodiments, the conference-related authorization may include a conference presentation authorization.

In some embodiments, the method may further include: determining, in response to determining that the target authorization includes the conference presentation authorization, the target sharable content as a current presentation content of the multimedia conference. In an embodiment, a first notification including a current presentation content identifier may also be sent to the server.

Here, the current presentation content identifier may indicate the current presentation content.

Here, the current presentation content of the multimedia conference may be understood as a default display content of the multimedia conference. In other words, the sharable content displayed by a terminal of the participant is the current presentation content of the multimedia conference before the participant (without the conference presentation authorization) of the multimedia conference performs a selection operation on the sharable content.

It may be understood that the conference presentation authorization may be understood as a control authorization on the current presentation content of the multimedia conference. The participant with the conference presentation authorization may be referred to as a speaker.

Here, the server may share the content being presented by the speaker among the participants based on the first notification.

In some embodiments, the method further includes: displaying, in response to the target authorization including the conference presentation authorization and in response to determining that there is a participant in a following mode in the multimedia conference, the current presentation content on an interface of the participant in the following mode, where the current presentation content is at least partially identical to a content presented by a current presentation object.

For example, a participant A is in the following mode, a participant B is presenting the sharable content. The content currently displayed by the participant A is at least partially the same as the content presented by the participant B. In some application scenarios, there may be problems such as network delay, which may cause the content currently displayed by the participant A to be somewhat different from the content presented by the participant B. In some embodiments, the display area of the participant A may be divided into two blocks, one for displaying the content presented by the participant B, and the other for displaying other contents.

Here, if the target participant has the presentation authorization, and there is a participant in the following mode in the multimedia conference, the current display content of the target sharable content selected by the target participant may be shared with the participant in the following mode.

In this way, the content presented by the presenter of the multimedia conference may be quickly updated for the participant in the following mode.

In some embodiments, the displaying, in response to the target authorization including the conference presentation authorization and in response to determining that there is a participant in a following mode in the multimedia conference, the current presentation content on an interface of the participant in the following mode includes: sending, in response to the target authorization including the conference presentation authorization and in response to determining that there is the participant in the following mode in the multimedia conference, a content identifier of the current presentation content of the multimedia conference to a server, where the server sends the content identifier to the participant in the following mode, and displays a current presentation content indicated by the content identifier on the interface of the participant in the following mode.

Here, a current presentation content identifier of the multimedia conference may be sent to the server.

Here, the server may send the content identifier to the participant in the following mode.

Then, the participant in the following mode may display the current presentation content.

It may be understood that if the target authorization does not include the conference presentation authorization, the target sharable content displayed by the target participant based on the selection operation on the sharable content identifiers will not be shared with other participants.

In some embodiments, the authorizations of the multimedia conference include a conference presentation authorization. The displaying the current presentation content of the multimedia conference includes: displaying, in a case that the target authorization does not include the conference presentation authorization, the target sharable content indicated by the target sharable content identifier selected by the target participant.

In other words, a sharable content receiver may freely switch between multiple documents in a video conference window, independent of which document a sharer is currently sharing.

In some embodiments, the method further includes: displaying a current presentation information prompt control in a case that the target authorization does not include the conference presentation authorization.

In some embodiments, the method further includes: displaying, in response to detecting a triggering operation on the current presentation information prompt control, the current presentation content of the multimedia conference.

Here, the triggering operation on the current presentation information prompt control may be implemented in different ways according to a displaying manner of the current presentation information prompt control.

For example, the current presentation information prompt control may be displayed through a display box, and the display box may include a confirmation control and a rejection control. The user clicking on the confirmation control may be regarded as a confirmation operation on the current presentation information prompt control.

For example, the current presentation information prompt control may be displayed on a current presentation content following control, and a trigger operation of the user on the current presentation content following control may be regarded as a confirmation operation on the current presentation information prompt control.

Here, the current presentation information prompt control may be used to inquire whether to display the current presentation content indicated by the current presentation content identifier.

It should be noted that, if the target participant does not have the conference presentation authorization, the user may choose whether to follow the current presentation content of the speaker by displaying the current presentation information prompt control. Therefore, the participant may quickly jump to display the current presentation content of the speaker by a confirmation operation on the current presentation information prompt control, thereby saving time of the participant in searching for the current presentation content among multiple sharable contents.

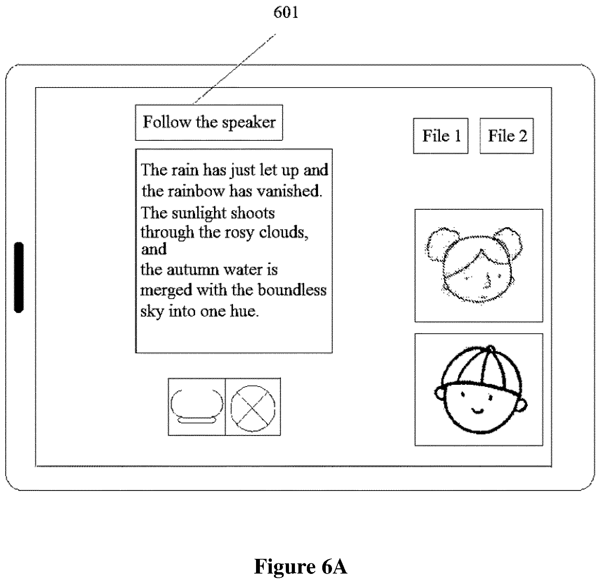

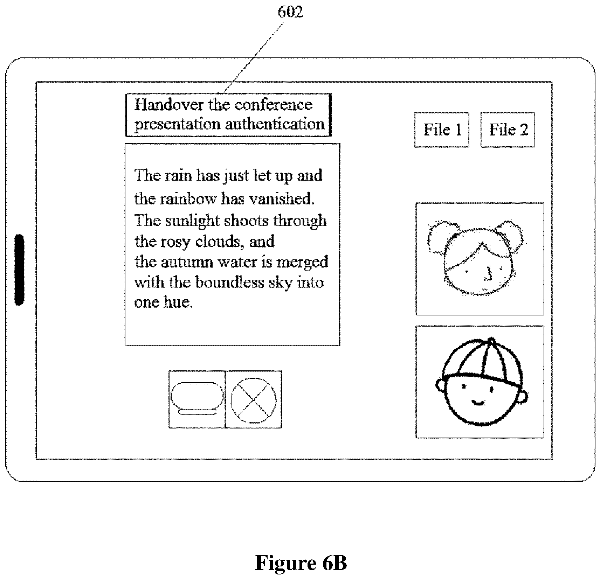

Reference is made to Figure 6A and Figure 6B, Figure 6A shows a scenario in which a participant does not have a conference-related authorization. Figure 6B shows a scenario in which a participant has a conference-related authorization.

As shown in Figure 6A, if a participant does not have a conference-related authorization, that is, the participant is not the speaker, the execution body may display the current presentation document prompt control 601.

As shown in Figure 6B, if a participant has a conference-related authorization, that is, the participant is the speaker, the execution body may display the conference presentation authorization handover control 602.

It may be understood that, for the description of other parts in Figure 6A and Figure 6B, reference may be made to Figure 2A, and details are not repeated here.

In some embodiments, the displaying the current presentation content of the multimedia conference includes: displaying the current presentation content of the multimedia conference in a target display mode.

Here, the target display mode is any one of a free browsing mode and a following mode. The free browsing mode indicates that the current presentation content of the multimedia conference is displayed under control of the target participant. The following mode indicates that the current presentation content is at least partially the same as the content presented by the current presentation object. In other words, the following mode indicates displaying a currently presented part of the current presentation content of the multimedia conference.

Here, the target display mode may be selected by the participant after the current presentation content is displayed, or may be uniformly set by the participant in the settings, or may be default.

In some embodiments, the target display mode is determined by: determining a display mode after switching as the target display mode in response to detecting a triggering operation on the display mode switching control.

Here, the specific style of the above target display control is not limited here. Through the mode switching control, it is possible to switch between different display modes, so that the participant can independently control the display mode of the current presentation content.

Here, the target sharable content may be the current presentation content of the multimedia conference, or may not be the current presentation content of the multimedia conference. If the target sharable content is the current presentation content of the multimedia conference, the currently presented part of the current presentation content may be a part that the speaker is presenting.

It should be noted that, through the following mode, the participant may quickly follow the presentation progress of the speaker of the target sharable content after jumping to display the target sharable content, thereby improving the efficiency of information acquisition by the participant.

It should be noted that, through the free browsing mode, the target participant may display the current presentation content according to its own progress. In other words, for the current presentation content being presented by a participant with presentation authorization, the target participant may control to repeatedly view the current presentation content even when he does not obtain sufficient information, thereby improving the efficiency of the target participant of obtaining information from the current presentation content.

In some embodiments, the displaying an operation control corresponding to the target authorization on an interface of the target participant based on the target authorization of the target participant in the multimedia conference includes: displaying a conference presentation authorization handover control based on the target authorization including a conference presentation authorization.

Here, the style and display position of the conference presentation authorization handover control may be set according to an actual situation, which is not limited here.

In some embodiments, the method may further include: sending, in response to detecting a trigger operation on the conference presentation authorization handover control, a conference presentation authorization handover notification to a server based on the handover object identifier specified by the target participant.

Here, the conference presentation authorization handover notification may include the handover object identifier. The handover object identifier indicates a participant as a conference presentation authorization handover object.

In some application scenarios, the execution body may display the participant identifier of the multimedia conference in response to a trigger operation on the conference presentation authorization handover control. Then, the target participant may select one or more participant identifiers as the handover object identifiers. Finally, the execution body may send a conference presentation authorization handover notification including the handover object identifiers to the server.

Here, through the conference presentation authorization handover control, a target participant (that is, the speaker) with presentation authorization may handover the presentation authorization to other participants of the multimedia conference, so as to realize the handover of the presentation authorization. Therefore, in the process of the multimedia conference, a speaker suitable for the current process may be determined according to the actual process, so as to avoid a situation that the current speaker is not suitable for the current conference process and thus cause a poor interaction of the multimedia conference, so that the interaction efficiency of the multimedia conference can be improved, thereby reducing the time duration of the multimedia conference, thus saving the computing resources and communication resources consumed by the multimedia conference.

Here, the editing authorization modification authorization and editing authorization may be understood as sharer authorizations.

In some embodiments, the displaying, based on a target authorization of a target participant in the multimedia conference, an operation control corresponding to the target authorization on an interface of the target participant includes: displaying, in response to determining that the target authorization includes a sharer authorization, an editing authorization modification control for the target sharable content.

Here, the sharer of the target sharable content may control the editing authorization of the target sharable content.

Here, the specific implementation manner of the editing authorization modification control may be set according to actual situations, which is not limited here.

In some embodiments, the method may further include: generating, in response to detecting a triggering operation on the editing authorization modification control, editing authorization information on the target sharable content based on an editing authorization modified by the target participant.

Here, the specific implementation manner of the editing authorization modification control may affect the triggering manner of the editing authorization modification control, that is, a manner in which the target participant modifies the editing authorization.

In some application scenarios, the editing authorization modification control may include an entry control and a specific authorization control. The user may click on the entry control, and the execution body may display at least one specific authorization control, and the specific authorization control may set the editing authorization control for a single authorization, for example, the editing authorization, and the editing authorization control may be set with an open state and a closed state. The open state indicates a participant who is not a sharer of the target sharable content may edit the target sharable content, and the closed state indicates that a participant who is not a sharer of the target sharable content cannot edit the target sharable content.

In some application scenarios, the editing authorization modification control may be set on a setting interface of the user. An editing authorization about a sharable content set by the user in the setting interface may be applied to all sharable contents shared by the user in each multimedia conference. Thus, the one-time setting of the user may be applied to all the sharable contents, which can save the time of the user for setting editing authorization.

It should be noted that, through the editing authorization modification control, the target participant may set the editing authorization of the target sharable content, so that an editing authorization suitable for the target sharable content can be set according to the actual situation of the target sharable content, thereby improving the flexibility of the editing authorization. Through the flexible editing authorization, it can be ensured that the information in the target sharable content is communicated while the risk of possible leakage or tampering of the information in the target sharable content can be avoided.

In some embodiments, the enabling the related function control based on the determined authorization includes: displaying the sharer authorization handover control of the target sharable content in response to determining that the target participant has the sharer authorization.

In some embodiments, the method further includes: determining, in response to determining that the target authorization does not include the sharer authorization, an editing authorization of the target participant on the target sharable content based on editing authorization information determined by a sharer of the target sharable content.

In some application scenarios, as described above, the editing authorization may include, but is not limited to, at least one of the following: a read authorization, an editing authorization, a saving authorization, a download authorization, and the like.

For example, if the sharer of the sharable content determines that the editing authorization of the target sharable content includes the editing authorization, the execution body may display controls related to the editing authorization, such as some function controls required for editing, such as a modification control for adjusting the line spacing.

For example, if the sharer of the sharable content determines that the editing authorization of the target sharable content includes the saving authorization, the execution body may display controls related to the saving authorization.

For example, if the sharer of the sharable content determines that the editing authorization of the target sharable content includes the downloading authorization, the execution body may display controls related to the downloading authorization.

It should be noted that, by determining whether to enable the operation controls of the execution body through the editing authorization specified by an initiator, a participant without authorization can be effectively prevented from editing the target sharable content, which can ensure that the information in the target sharable content is conveyed while the risk of possible leakage or tampering of the information in the target sharable content is avoided.

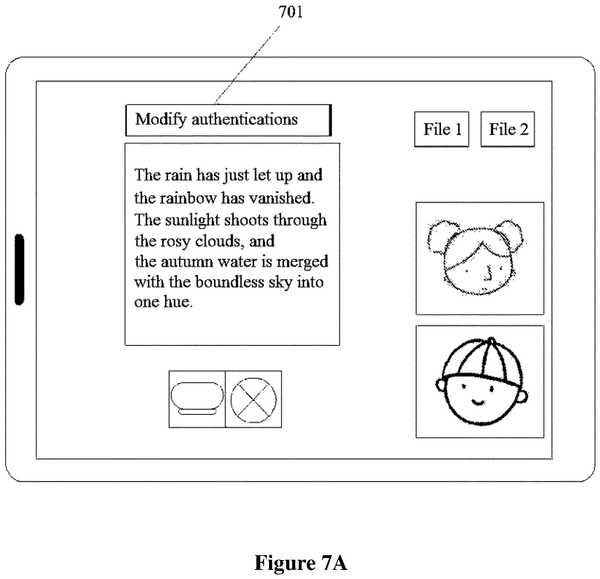

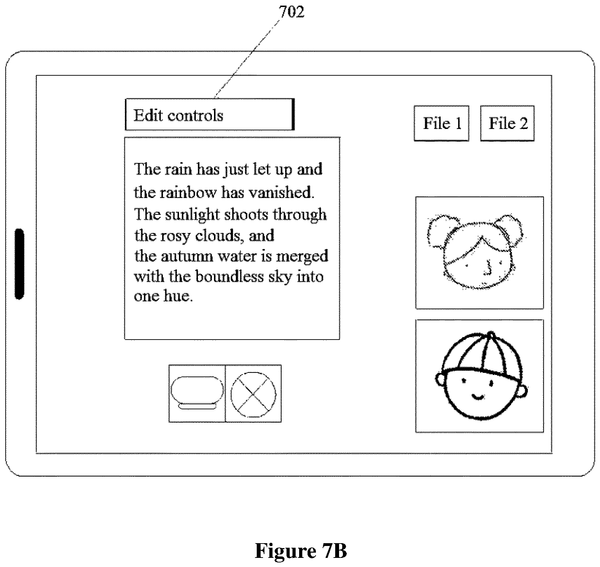

Reference is made to Figure 7A and Figure 7B, Figure 7A shows a scenario in which a participant has the sharer authorization. Figure 7B shows a scenario a participant does not have the sharer authorization.

As shown in Figure 7A, if a participant has the sharer authorization, that is, the participant is the sharer of the target sharable content, the execution body may display an editing authorization modification control 701.

If a participant does not have the sharer authorization, that is, the participant is not the sharer of the target sharable content, the execution body may determine whether to display related operation controls based on whether the target participant has the editing authorization. For example, as shown in Figure 7B, the execution body may display an editing control 702.

It may be understood that, for the description of other parts in Figure 7A and Figure 7B, reference may be made to Figure 2A, and details are not repeated here.

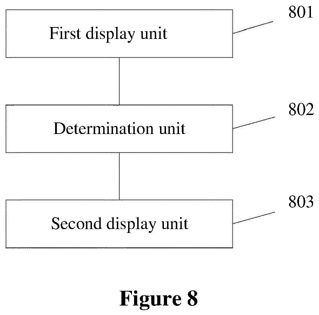

Reference is further made to Figure 8, as an implementation of the methods shown in the above figures, an interaction device is further provided according to an embodiment of the present disclosure, which corresponds to the method embodiment shown in Figure 1, and the device may be applied in various electronic devices.

As shown in Figure 8, the interaction device according to the embodiment includes: a first display unit 801, a determination unit 802 and a second display unit 803. The first display unit is configured to display at least two sharable content identifiers of a multimedia conference, where the at least two sharable content identifiers each indicates a content shared by a participant of the multimedia conference during the multimedia conference. The determination unit is configured to determine, based on a selection operation on the at least two sharable content identifiers, a target sharable content identifier from the at least two sharable content identifiers. The second display unit is configured to display a target sharable content indicated by the target sharable content identifier.

In the embodiment, for the specific processing of the first display unit 801, the determination unit 802 and the second display unit 803 of the interaction device and the technical effects thereof, reference is made to the description to steps 101 and 102 in the embodiment corresponding to Figure 1, which is not repeated here.

In some embodiments, a sharable content indicated by the sharable content identifier includes a cloud file stored in a cloud storage space.

In some embodiments, the cloud file includes a file uploaded from a local terminal of the participant to the cloud storage space by the participant during the conference of the multimedia conference.

In some embodiments, the device is further configured to display, based on a target authorization of a target participant in the multimedia conference, an operation control corresponding to the target authorization on an interface of the target participant, where the target participant is a participant that executes the selection operation.

In some embodiments, the target authorization is determined by: determining, based on identifier information of the target participant, an authorization matching the identifier information from authorizations of the multimedia conference as the target authorization.

In some embodiments, the device is further configured to determine, in response to the target authorization including a conference presentation authorization, the target sharable content as a current presentation content of the multimedia conference, where the conference presentation authorization is a control authorization on the current presentation content of the multimedia conference.

In some embodiments, the device is further configured to: display, in response to the target authorization including the conference presentation authorization and in response to determining that there is a participant in a following mode in the multimedia conference, the current presentation content on an interface of the participant in the following mode, where the current presentation content is at least partially identical to a content presented by a current presentation object.

In some embodiments, the displaying, in response to the target authorization including the conference presentation authorization and in response to determining that there is a participant in a following mode in the multimedia conference, the current presentation content on an interface of the participant in the following mode includes: sending, in response to the target authorization including the conference presentation authorization and in response to determining that there is the participant in the following mode in the multimedia conference, a content identifier of the current presentation content of the multimedia conference to a server, where the server sends the content identifier to the participant in the following mode, and displays the current presentation content indicated by the content identifier on the interface of the participant in the following mode.

In some embodiments, authorizations of the multimedia conference include a conference presentation authorization. A current presentation content of the multimedia conference is displayed by: displaying, in a case that the target authorization does not include the conference presentation authorization, the target sharable content indicated by the target sharable content identifier selected by the target participant.

In some embodiments, authorizations of the multimedia conference include a conference presentation authorization. The device is further configured to display, in a case that the target authorization does not include the conference presentation authorization, a current presentation content prompt control.

In some embodiments, the device is further configured to display, in response to detecting a triggering operation on the current presentation content prompt control, the current presentation content of the multimedia conference.

In some embodiments, the displaying the current presentation content of the multimedia conference includes: displaying the current presentation content of the multimedia conference in a target display mode, where the target display mode is one of a free browsing mode and a following mode, and where the free browsing mode indicates displaying the current presentation content of the multimedia conference under control of the target participant, the following mode indicates that the current presentation content is at least partially identical to a content presented by a current presentation object.

In some embodiments, the target display mode is determined by: determining, in response to detecting a triggering operation on a display mode switching control, a display mode after switching as the target display mode.

In some embodiments, the displaying, based on a target authorization of a target participant in the multimedia conference, an operation control corresponding to the target authorization on an interface of the target participant includes: displaying a conference presentation authorization handover control based on the target authorization including a conference presentation authorization. The device is further configured to send, in response to detecting a trigger operation on the conference presentation authorization handover control, a conference presentation authorization handover notification including a handover object identifier specified by the target participant to a server based on the handover object identifier, where the handover object identifier indicates a participant as a conference presentation authorization handover object.

In some embodiments, the displaying, based on a target authorization of a target participant in the multimedia conference, an operation control corresponding to the target authorization on an interface of the target participant includes: displaying, based on the target authorization including a sharer authorization, at least one of an editing control and an editing authorization modification control for the target sharable content, where the sharer authorization includes at least one of an editing authorization and an editing authorization modification authorization.

In some embodiments, the device is further configured to generate, in response to detecting a triggering operation on the editing authorization modification control, editing authorization information on the target sharable content based on a modified editing authorization.

In some embodiments, authorizations of the multimedia conference include a sharer authorization. The device is further configured to determine, in response to determining that the target authorization does not include the sharer authorization, an editing authorization of the target participant on the target sharable content based on editing authorization information determined by a sharer of the target sharable content, where the sharer authorization includes at least one of an editing authorization, and an editing authorization modification authorization.

In some embodiments, the device is further configured to display an addition prompt information in response to determining that a sharable content is newly added during the multimedia conference.

In some embodiments, the device is further configured to: generate an addition prompt control in response to determining that a sharable content is newly added during the multimedia conference, and display the addition prompt control; and display the newly added sharable content in response to detecting a triggering operation on the addition prompt control.

In some embodiments, the device is further configured to: stop, in response to determining that a sharable content is being displayed in a sharable content display area and in response to detecting a selection operation on the at least two sharable content identifiers, displaying the sharable content that is being displayed; and display the target sharable content in the sharable content display area.

In some embodiments, the device is further configured to add a new sharable content display area in response to determining that a sharable content is being displayed in a sharable content display area and in response to detecting a selection operation on the at least two sharable content identifiers, and display the target sharable content in the new sharable content display area.

In some embodiments, a sharable content of the multimedia conference is initiated by at least one participant during the multimedia conference.

In some embodiments, the displaying at least two sharable content identifiers of the multimedia conference includes: displaying the sharable content identifiers in response to determining that the number of sharable contents of the multimedia conference is greater than a preset first number threshold.

In some embodiments, the displaying a target sharable content indicated by the target sharable content identifier includes: displaying the target sharable content indicated by the target sharable content identifier on a multimedia conference interface.

In some embodiments, the device is further configured to display a sharable content identifier acquisition control in response to determining that the number of sharable contents of the multimedia conference is greater than a preset second number threshold, where the sharable content identifier acquisition control is used to acquire a sharable content identifier that is not displayed currently.

In some embodiments, the device is further configured to determine, based on operation authorization information set by a sharer of the target sharable content, an operation authorization of the participant on the target sharable content after the multimedia conference ends.

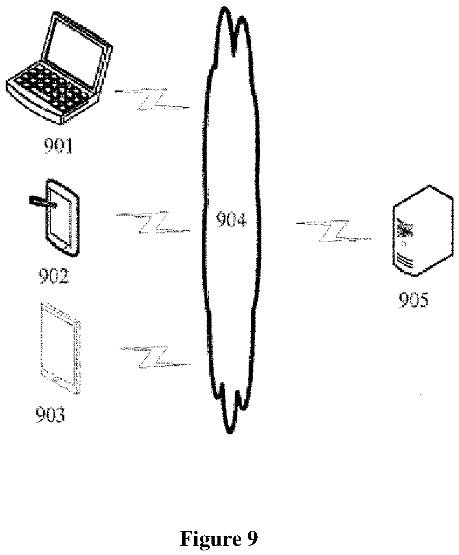

Reference is made to Figure 9, which shows an exemplary system architecture in which the interaction method according to the embodiment of the present disclosure may be applied.

As shown in Figure 9, the system architecture may include terminal devices 901, 902, and 903, a network 904, and a server 905. The network 904 is a medium used to provide a communication link between the terminal devices 901, 902, 903 and the server 905. The network 904 may include various connection types, such as wired, wireless communication links, or fiber optic cables.

The terminal devices 901, 902, and 903 may interact with the server 905 through the network 904 to receive or send messages and the like. Various client applications may be installed on the terminal devices 901, 902 and 903, such as web browser applications, search applications, and news information applications. The client applications in the terminal devices 901, 902, and 903 may receive instructions from the user, and perform corresponding functions according to the instructions from the user, for example, adding corresponding information to the information according to the instructions from the user.

The terminal devices 901, 902, and 903 may be hardware or software. When the terminal devices 901, 902, and 903 are hardware, the terminal devices 901, 902, and 903 may be various electronic devices that have a display screen and support web browsing, including but not limited to smart phones, tablet computers, e-book readers, Moving Picture Experts Group Audio Layer III (MP3) players, Moving Picture Experts Group Audio Layer IV (MP4) Players, Laptops and Desktops, and the like. When the terminal devices 901, 902, and 903 are software, the terminal devices 901, 902, and 903 may be installed in the electronic devices listed above. The terminal devices 901, 902, and 903 may be implemented as multiple software or software modules (for example, software or software modules for providing distributed services), or may be implemented as a single software or software module, which is not limited here.

The server 905 may be a server that provides various services, such as receiving information acquisition requests sent by the terminal devices 901, 902, and 903, and acquiring display information corresponding to the information acquisition requests in various ways according to the information acquisition requests, and sending data related to the display information to the terminal devices 901, 902, and 903.

It should be noted that the interaction method according to the embodiment of the present disclosure may be executed by a terminal device, and correspondingly, the interaction device may be provided in the terminal devices 901, 902, and 903. In addition, the interaction method according to the embodiment of the present disclosure may also be executed by the server 905, and correspondingly, the interaction device may be provided in the server 905.

It should be understood that the numbers of terminal devices, networks and servers in Figure 9 are merely illustrative. There may be any number of terminal devices, networks and servers according to implementation needs.

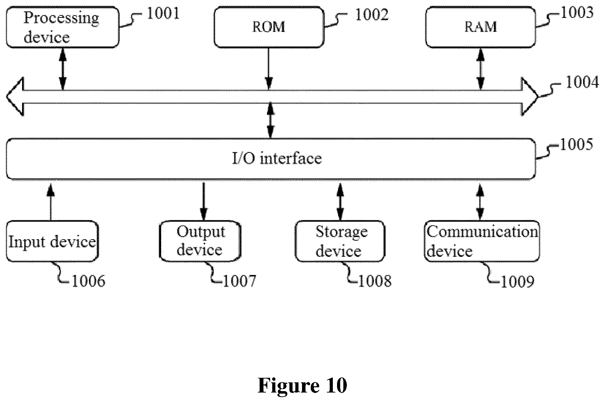

Reference is made to Figure 10, which is a schematic structural diagram of an electronic device (for example, the terminal device or the server in Figure 9) suitable for implementing an embodiment of the present disclosure. Terminal devices in the embodiment of the present disclosure may include, but are not limited to, mobile terminals such as mobile phones, notebook computers, digital broadcast receivers, Personal Digital Assistants (PDAs), Tablets (PADs), Portable Multimedia Players (PMPs), vehicle-mounted terminals (for example, in-vehicle navigation terminals); and stationary terminals such as digital TVs, desktop computers. The electronic device shown in Figure 10 is only an example, and should not impose any limitation on the function and use range of the embodiments of the present disclosure.

As shown in Figure 10, the electronic device may include a processing device (for example, a central processing unit, a graphics processor, and the like) 1001, which may execute various appropriate actions and processes based on programs stored in a read only memory (ROM) 1002 or programs loaded from a storage device 1008 into a random access memory (RAM) 1003. In the RAM 1003, various programs and data necessary for the operation of the electronic device 1000 are also stored. The processing device 1001, the ROM 1002, and the RAM 1003 are connected to each other through a bus 1004. An input/output (I/O) interface 1005 is also connected to bus 1004.

In general, the following devices may be connected to the I/O interface 1005: an input device 1006 including, for example, a touch screen, a touch pad, a keyboard, a mouse, a camera, a microphone, an accelerometer, a gyroscope, and the like; an output device 1007 including, for example, a liquid crystal display (LCD), a speaker, a vibrator, and the like.; a storage device 1008 including, for example, a magnetic tape, a hard disk, and the like; and a communication device 1009. The communication device 1009 may allow the electronic device to communicate wirelessly or by wire with other devices to exchange data. Although Figure 10 shows an electronic device having various means, it should be understood that not all of the illustrated means are required to be implemented or available. More or fewer means may alternatively be implemented or provided.

In particular, according to embodiments of the present disclosure, the processes described above with reference to the flowcharts may be implemented as computer software programs. For example, a computer program product is provided according to an embodiment of the present disclosure include, which includes a computer program carried on a non-transitory computer readable medium, the computer program includes program codes for performing the method shown in the flowchart. In the embodiment, the computer program may be downloaded and installed from the network via the communication device 1009, or from the storage device 1008, or from the ROM 1002. When the computer program is executed by the processing device 1001, the functions defined in the methods of the embodiments of the present disclosure are executed.

It should be noted that the computer-readable medium of the present disclosure may be a computer-readable signal medium or a computer-readable storage medium or any combination thereof. The computer-readable storage medium may be, for example, but is not limited to, an electrical, magnetic, optical, electromagnetic, infrared, or semiconductor system, apparatus or device, or any combination thereof. More specific examples of computer readable storage medium may include, but are not limited to, an electrical connection with one or more wires, a portable computer disk, a hard disk, a random access memory (RAM), a read only memory (ROM), an erasable Programmable read only memory (EPROM or flash memory), an optical fiber, a portable compact disk read only memory (CD-ROM), an optical storage device, a magnetic storage device, or any suitable combination thereof. In the present disclosure, the computer-readable storage medium may be any tangible medium that contains or stores a program that may be used by or in conjunction with an instruction execution system, apparatus, or device. In the present disclosure, the computer-readable signal medium may include a data signal propagated in baseband or as part of a carrier wave with computer-readable program code embodied thereon. Such propagated data signals may take a variety of forms, including but not limited to electromagnetic signals, optical signals, or any suitable combination thereof. The computer-readable signal medium may also be any computer-readable medium other than a computer-readable storage medium that may transmit, propagate, or transport the program for use by or in connection with the instruction execution system, apparatus, or device. Program codes embodied on a computer readable medium may be transmitted using any suitable medium including, but not limited to, electrical wire, optical fiber cable, radio frequency (RF), and the like, or any suitable combination thereof.

In some embodiments, the client and the server may use any currently known or future developed network protocol such as HTTP (HyperText Transfer Protocol) to communicate, and may interconnect with any form or medium digital data communications (for example, communication networks). Examples of communication networks include local area networks ("LAN"), wide area networks ("WAN"), the Internet (for example, the Internet), and peer-to-peer networks (for example, ad hoc peer-to-peer networks), as well as any currently known or future development networks.

The computer-readable medium may be contained in the electronic device, or exist alone without being assembled into the electronic device.

The computer-readable medium carries one or more programs, and when the one or more programs are executed by the electronic device, the electronic device is caused to: display at least two sharable content identifiers of a multimedia conference, where the at least two sharable content identifiers each indicates a content shared by a participant of the multimedia conference during the multimedia conference; determine, based on a selection operation on the at least two sharable content identifiers, a target sharable content identifier from the at least two sharable content identifiers; and display a target sharable content indicated by the target sharable content identifier.

Computer program codes for performing operations of the present disclosure may be written in one or more programming languages, including but not limited to object-oriented programming languages, such as Java, Smalltalk, C++, also including conventional procedural programming languages, such as the "C" language or similar programming languages. The program codes may be executed entirely on a computer of a user, partly on a computer of a user, as a stand-alone software package, partly on a computer of a user and partly on a remote computer, or entirely on a remote computer or server. In the case of a remote computer, the remote computer may be connected to the computer of the user through any kind of networks, including a local area network (LAN) or a wide area network (WAN), or may be connected to an external computer (for example, via Internet connection by an Internet service provider).

The flowchart and block diagrams in the Figures illustrate the architecture, functionality, and operation that may be implemented by systems, methods and computer program products according to various embodiments of the present disclosure. In this regard, each block in the flowchart or block diagrams may represent a module, segment, or portion of code that contains one or more executable instructions for implementing specified logical functions. It should also be noted that, in some alternative implementations, the functions noted in the blocks may be implemented out of the order noted in the figures. For example, two blocks shown in succession may, in fact, be executed substantially concurrently, or the blocks may sometimes be executed in the reverse order, depending upon the functionality involved. It is also noted that each block of the block diagrams and/or flowcharts, and combinations of blocks in the block diagrams and/or flowcharts, may be implemented in dedicated hardware-based systems that perform the specified functions or operations, or may be implemented in a combination of dedicated hardware and computer instructions.

The units involved in the embodiments of the present disclosure may be implemented in a software manner, or in a hardware manner. The name of the unit does not constitute a limitation of the unit itself under certain circumstances, for example, the first display unit may also be described as a "unit for displaying at least two sharable content identifiers".

The functions described herein may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logical Devices (CPLDs) and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read only memory (ROM), an erasable programmable read only memory (EPROM or flash memory), a fiber optic, a compact disk read only memory (CD-ROM), an optical storage device, a magnetic storage device, or any suitable combination thereof.

While the disclosure has been shown and described with reference to various embodiments thereof, it will be understood by those skilled in the art that various changes in form and details may be made therein without departing from the scope of the disclosure as defined by the appended claims.

## Claims

1. An interaction method, applied to a client of a multimedia conference participant, the method comprising:
displaying at least two sharable content identifiers of a multimedia conference, wherein the at least two sharable content identifiers each indicates a content could be shared by a participant of the multimedia conference during the multimedia conference;
determining, based on a selection operation on the at least two sharable content identifiers, a target sharable content identifier from the at least two sharable content identifiers; and
displaying a target sharable content indicated by the target sharable content identifier;
displaying another sharable content in response to a selection operation or switching operation of the participant in the multimedia conference among the at least two sharable contents;
the sharable content being browsed by the participant in the multimedia conference is the sharable content currently being presented in the multimedia conference, or, the sharable content being browsed by the participant in the multimedia conference is not the sharable content currently being presented in the multimedia conference;
adding a new sharable content display area in response to determining that a sharable content is being displayed in a sharable content display area, and
in response to detecting a selection operation on a sharable content identifier, displaying the target sharable content in the new sharable content display area.

2. The method according to claim 1, wherein a sharable content indicated by each of the at least two sharable content identifiers comprises a cloud file stored in a cloud storage space.

3. The method according to claim 2, wherein the cloud file comprises a file uploaded from a local terminal of the participant to the cloud storage space by the participant during the multimedia conference.

4. The method according to claim 1, further comprising:
displaying, based on a target authorization of a target participant in the multimedia conference, an operation control corresponding to the target authorization on an interface of the target participant, wherein the target participant is a participant that executes the selection operation.

5. The method according to claim 4, wherein the target authorization is determined by:
determining, from authorizations of the multimedia conference , an authorization matching the identifier information as the target authorization, based on identifier information of the target participant.

6. The method according to claim 4, further comprising:
determining, in response to the target authorization comprising a conference presentation authorization, the target sharable content as a current presentation content of the multimedia conference, wherein the conference presentation authorization is a control authorization on the current presentation content of the multimedia conference.

7. The method according to claim 6, further comprising:
displaying, in response to the target authorization comprising the conference presentation authorization and in response to determining that there is a participant in a following mode in the multimedia conference, the current presentation content on an interface of the participant in the following mode, wherein the current presentation content is at least partially identical to a content presented by a current presentation object.

8. The method according to claim 4, wherein authorizations of the multimedia conference comprise a conference presentation authorization; and
a current presentation content of the multimedia conference is displayed by:
displaying, in a case that the target authorization does not comprise the conference presentation authorization, the target sharable content indicated by the target sharable content identifier selected by the target participant, wherein the target sharable content indicated by the target sharable content identifier selected by the target participant don't display on the interface of the participant .

9. The method according to claim 4, further comprising:
displaying, in response to detecting a triggering operation on the current presentation content prompt control, the current presentation content of the multimedia conference;
wherein the displaying the current presentation content of the multimedia conference comprises:
displaying the current presentation content of the multimedia conference in a target display mode, wherein the target display mode is one of a free browsing mode and a following mode, and wherein the free browsing mode indicates displaying the current presentation content of the multimedia conference under control of the target participant, the following mode indicates that the current presentation content is at least partially identical to a content presented by a current presentation object.

10. The method according to claim 4, wherein authorizations of the multimedia conference comprise a conference presentation authorization, and the method further comprises:
displaying a current presentation content prompt control in a case that the target authorization does not comprise the conference presentation authorization.

11. The method according to claim 4, wherein the displaying, based on a target authorization of a target participant in the multimedia conference, an operation control corresponding to the target authorization on an interface of the target participant comprises:
displaying a conference presentation authorization handover control based on the target authorization comprising a conference presentation authorization, and
the method further comprises:
sending, in response to detecting a trigger operation on the conference presentation authorization handover control, a conference presentation authorization handover notification comprising a handover object identifier specified by the target participant to a server based on the handover object identifier.

12. The method according to claim 4, wherein the displaying, based on a target authorization of a target participant in the multimedia conference, an operation control corresponding to the target authorization on an interface of the target participant comprises:
displaying, based on the target authorization comprising a sharer authorization, at least one of an editing control and an editing authorization modification control for the target sharable content, wherein the sharer authorization comprises at least one of an editing authorization and an editing authorization modification authorization;
the method further comprising:
generating, in response to detecting a triggering operation on the editing authorization modification control, editing authorization information on the sharable content based on a modified editing authorization.

13. The method according to claim 4, wherein authorizations of the multimedia conference comprise a sharer authorization, and the method further comprises:
determining, in response to determining that the target authorization does not comprise the sharer authorization, an editing authorization of the target participant on the target sharable content based on editing authorization information determined by a sharer of the target sharable content, wherein the sharer authorization comprises at least one of an editing authorization, and an editing authorization modification authorization.

14. The method according to claim 1, wherein the displaying a target sharable content indicated by the target sharable content identifier comprises:
displaying the target sharable content indicated by the target sharable content identifier on a multimedia conference interface.

15. The method according to claim 1, further comprising:
displaying, in response to determining that a sharable content is newly added during the multimedia conference, an addition prompt information; and/or,
generating an addition prompt control in response to determining that a sharable content is newly added during the multimedia conference, and displaying the addition prompt control; and
displaying the newly added sharable content in response to detecting a triggering operation on the addition prompt control; and/or,
stopping, in response to determining that a sharable content is being displayed in a sharable content display area and in response to detecting a selection operation on the at least two sharable content identifiers, displaying the sharable content that is being displayed; and
displaying the target sharable content in the sharable content display area; and/or,
displaying a sharable content identifier acquisition control in response to determining that the number of sharable contents of the multimedia conference is greater than a preset second number threshold, wherein the sharable content identifier acquisition control is used to acquire a sharable content identifier that is not displayed currently; and/or,
determining, based on operation authorization information set by a sharer of the target sharable content, an operation authorization of a participant of the multimedia conference on the target sharable content after the multimedia conference ends.

16. The method according to claim 1, wherein a sharable content of the multimedia conference is initiated by at least one participant during the multimedia conference; and/or,
wherein the displaying at least two sharable content identifiers of the multimedia conference comprises:
displaying the sharable content identifiers in response to determining that the number of sharable contents of the multimedia conference is greater than a preset first number threshold.

17. An interaction device, applied to a client of a multimedia conference participant, the interaction device comprising:
at least one processor; and
at least one memory communicatively coupled to the at least one processor and storing instructions that upon execution by the at least one processor cause the device to: display at least two sharable content identifiers of the multimedia conference, wherein the at least two sharable content identifiers each indicates a content shared by a participant of the multimedia conference during the multimedia conference;
determine, based on a selection operation on the at least two sharable content identifiers, a target sharable content identifier from the at least two sharable content identifiers; and
display a target sharable content indicated by the target sharable content identifier;
displaying another sharable content in response to a selection operation or switching operation of the participant in the multimedia conference among the at least two sharable contents;
the sharable content being browsed by the participant in the multimedia conference is the sharable content currently being presented in the multimedia conference, or, the sharable content being browsed by the participant in the multimedia conference is not the sharable content currently being presented in the multimedia conference;
add a new sharable content display area in response to determining that a sharable content is being displayed in a sharable content display area, and in response to detecting a selection operation on a sharable content identifier, displaying the target sharable content in the new sharable content display area.

18. A computer-readable non-transitory medium, applied to a client of a multimedia conference participant, the computer-readable non-transitory medium comprising a computer program stored thereon, wherein the program, when executed by a computer, cause the computer to
display at least two sharable content identifiers of the multimedia conference, wherein the at least two sharable content identifiers each indicates a content shared by a participant of the multimedia conference during the multimedia conference;
determine, based on a selection operation on the at least two sharable content identifiers, a target sharable content identifier from the at least two sharable content identifiers; and
display a target sharable content indicated by the target sharable content identifier;
displaying another sharable content in response to a selection operation or switching operation of the participant in the multimedia conference among the at least two sharable contents;
the sharable content being browsed by the participant in the multimedia conference is the sharable content currently being presented in the multimedia conference, or, the sharable content being browsed by the participant in the multimedia conference is not the sharable content currently being presented in the multimedia conference;
add a new sharable content display area in response to determining that a sharable content is being displayed in a sharable content display area and in response to detecting a selection operation on sharable content identifiers, and displaying the target sharable content in the new sharable content display area.

## Patentansprüche

1. Interaktionsverfahren, das auf einen Client eines Teilnehmers einer Multimediakonferenz angewendet wird, wobei das Verfahren umfasst:
Anzeigen von mindestens zwei Kennungen für gemeinsam nutzbaren Inhalt einer Multimediakonferenz, wobei die mindestens zwei Kennungen für gemeinsam nutzbaren Inhalt jeweils angeben, dass ein Inhalt von einem Teilnehmer an der Multimediakonferenz während der Multimediakonferenz gemeinsam genutzt werden könnte;
Bestimmen einer Kennung für gemeinsam nutzbaren Zielinhalt aus den mindestens zwei Kennungen für gemeinsam nutzbaren Inhalt basierend auf einer Auswahloperation an den mindestens zwei Kennungen für gemeinsam nutzbaren Inhalt; und
Anzeigen eines durch die Kennung für gemeinsam nutzbaren Zielinhalt angegebenen gemeinsam nutzbaren Zielinhalts;
Anzeigen eines anderen gemeinsam nutzbaren Inhalts als Reaktion auf eine Auswahloperation oder Umschaltoperation des Teilnehmers an der Multimediakonferenz unter den mindestens zwei gemeinsam nutzbaren Inhalten;
wobei der von dem Teilnehmer an der Multimediakonferenz durchsuchte gemeinsam nutzbare Inhalt der gemeinsam nutzbare Inhalt ist, der aktuell in der Multimediakonferenz präsentiert wird, oder der von dem Teilnehmer an der Multimediakonferenz durchsuchte gemeinsam nutzbare Inhalt nicht der gemeinsam nutzbare Inhalt ist, der aktuell in der Multimediakonferenz präsentiert wird;
Hinzufügen eines neuen Anzeigebereichs für gemeinsam nutzbaren Inhalt als Reaktion auf das Bestimmen, dass ein gemeinsam nutzbarer Inhalt in einem Anzeigebereich für gemeinsam nutzbaren Inhalt angezeigt wird, und
als Reaktion auf das Erfassen einer Auswahloperation an einer Kennung für gemeinsam nutzbaren Inhalt, Anzeigen des gemeinsam nutzbaren Zielinhalts in dem neuen Anzeigebereich für gemeinsam nutzbaren Inhalt.

2. Verfahren nach Anspruch 1, wobei ein gemeinsam nutzbarer Inhalt, der von jeder der mindestens zwei Kennungen für gemeinsam nutzbaren Inhalt angegeben wird, eine in einem Cloud-Speicherplatz gespeicherte Cloud-Datei umfasst.

3. Verfahren nach Anspruch 2, wobei die Cloud-Datei eine Datei umfasst, die von dem Teilnehmer während der Multimediakonferenz von einem lokalen Endgerät des Teilnehmers in den Cloud-Speicherplatz hochgeladen wird.

4. Verfahren nach Anspruch 1, weiter umfassend:
Anzeigen, basierend auf einer Zielautorisierung eines Zielteilnehmers an der Multimediakonferenz, einer der Zielautorisierung entsprechenden Operationssteuerung auf einer Schnittstelle des Zielteilnehmers, wobei der Zielteilnehmer ein Teilnehmer ist, der die Auswahloperation ausführt.

5. Verfahren nach Anspruch 4, wobei die Zielautorisierung bestimmt wird durch:
Bestimmen einer mit den Kennungsinformationen übereinstimmenden Autorisierung aus den Autorisierungen der Multimediakonferenz als Zielautorisierung basierend auf Kennungsinformationen des Zielteilnehmers.

6. Verfahren nach Anspruch 4, weiter umfassend:
Bestimmen, als Reaktion darauf, dass die Zielautorisierung eine Konferenzpräsentationsautorisierung umfasst, des gemeinsam nutzbaren Zielinhalts als einen aktuellen Präsentationsinhalt der Multimediakonferenz, wobei die Konferenzpräsentationsautorisierung eine Steuerungsautorisierung für den aktuellen Präsentationsinhalt der Multimediakonferenz ist.

7. Verfahren nach Anspruch 6, weiter umfassend:
Anzeigen des aktuellen Präsentationsinhalts auf einer Schnittstelle des Teilnehmers im Folgemodus als Reaktion darauf, dass die Zielautorisierung die Konferenzpräsentationsautorisierung umfasst und als Reaktion auf das Bestimmen, dass sich in der Multimediakonferenz ein Teilnehmer in einem Folgemodus befindet, wobei der aktuelle Präsentationsinhalt mindestens teilweise mit einem von einem aktuellen Präsentationsobjekt präsentierten Inhalt identisch ist.

8. Verfahren nach Anspruch 4, wobei die Autorisierungen der Multimediakonferenz eine Konferenzpräsentationsautorisierung umfassen; und
ein aktueller Präsentationsinhalt der Multimediakonferenz angezeigt wird durch:
Anzeigen des durch die von dem Zielteilnehmer ausgewählte Kennung für gemeinsam nutzbaren Zielinhalt angegebenen gemeinsam nutzbaren Zielinhalt in einem Fall, dass die Zielautorisierung nicht die Konferenzpräsentationsautorisierung umfasst, wobei der durch die von dem Zielteilnehmer ausgewählte Kennung für gemeinsam nutzbaren Zielinhalt angegebene gemeinsam nutzbare Zielinhalt nicht auf der Schnittstelle des Teilnehmers angezeigt wird.

9. Verfahren nach Anspruch 4, weiter umfassend:
Anzeigen des aktuellen Präsentationsinhalts der Multimediakonferenz als Reaktion auf das Erfassen einer Auslöseoperation an der Eingabeaufforderungssteuerung für den aktuellen Präsentationsinhalt;
wobei das Anzeigen des aktuellen Präsentationsinhalts der Multimediakonferenz umfasst:
Anzeigen des aktuellen Präsentationsinhalts der Multimediakonferenz in einem Zielanzeigemodus, wobei der Zielanzeigemodus einer von einem freien Browsing-Modus und einem Folgemodus ist, und wobei der freie Browsing-Modus das Anzeigen des aktuellen Präsentationsinhalts der Multimediakonferenz unter Steuerung des Zielteilnehmers angibt und der Folgemodus angibt, dass der aktuelle Präsentationsinhalt mindestens teilweise mit einem von einem aktuellen Präsentationsobjekt präsentierten Inhalt identisch ist.

10. Verfahren nach Anspruch 4, wobei Autorisierungen der Multimediakonferenz eine Konferenzpräsentationsautorisierung umfassen und das Verfahren weiter umfasst:
Anzeigen einer Eingabeaufforderungssteuerung für den aktuellen Präsentationsinhalt in einem Fall, dass die Zielautorisierung nicht die Konferenzpräsentationsautorisierung umfasst.

11. Verfahren nach Anspruch 4, wobei das Anzeigen einer der Zielautorisierung entsprechenden Operationssteuerung auf einer Schnittstelle des Zielteilnehmers basierend auf einer Zielautorisierung eines Zielteilnehmers an der Multimediakonferenz Folgendes umfasst:
Anzeigen einer Übergabesteuerung für die Konferenzpräsentationsautorisierung basierend darauf, dass die Zielautorisierung eine Konferenzpräsentationsautorisierung umfasst, und
das Verfahren weiter Folgendes umfasst:
Senden einer Übergabebenachrichtigung für die Konferenzpräsentationsautorisierung, die eine von dem Zielteilnehmer spezifizierte Übergabeobjektkennung umfasst, an einen Server basierend auf der Übergabeobjektkennung als Reaktion auf das Erfassen einer Auslöseoperation der Übergabesteuerung für die Konferenzpräsentationsautorisierung.

12. Verfahren nach Anspruch 4, wobei das Anzeigen einer der Zielautorisierung entsprechenden Operationssteuerung auf einer Schnittstelle des Zielteilnehmers basierend auf einer Zielautorisierung eines Zielteilnehmers an der Multimediakonferenz Folgendes umfasst:
Anzeigen, mindestens einer von einer Bearbeitungssteuerung und einer Steuerung zur Autorisierung einer Bearbeitungsänderung für den gemeinsam nutzbaren Zielinhalt basierend darauf, dass die Zielautorisierung eine Freigeberautorisierung umfasst, wobei die Freigeberautorisierung mindestens eine von einer Bearbeitungsautorisierung und einer Autorisierung einer Bearbeitungsänderung umfasst;
wobei das Verfahren weiter umfasst:
Erzeugen von Bearbeitungsautorisierungsinformationen zu dem gemeinsam nutzbaren Inhalt basierend auf einer geänderten Bearbeitungsautorisierung als Reaktion auf das Erfassen einer Auslöseoperation an der Steuerung zur Autorisierung einer Bearbeitungsänderung.

13. Verfahren nach Anspruch 4, wobei Autorisierungen der Multimediakonferenz eine Freigeberautorisierung umfassen und das Verfahren weiter Folgendes umfasst:
Bestimmen, als Reaktion auf das Bestimmen, dass die Zielautorisierung nicht die Freigeberautorisierung umfasst, einer Bearbeitungsautorisierung des Zielteilnehmers für den gemeinsam nutzbaren Zielinhalt basierend auf Bearbeitungsautorisierungsinformationen, die von einem Freigeber des gemeinsam nutzbaren Zielinhalts bestimmt werden, wobei die Freigeberautorisierung mindestens eine von einer Bearbeitungsautorisierung und einer Autorisierung zur Autorisierung einer Bearbeitungsänderung umfasst.

14. Verfahren nach Anspruch 1, wobei das Anzeigen eines durch die Kennung für gemeinsam nutzbaren Zielinhalt angegebenen gemeinsam nutzbaren Zielinhalts Folgendes umfasst:
Anzeigen des durch die Kennung für gemeinsam nutzbaren Zielinhalt angegebenen gemeinsam nutzbaren Zielinhalts auf einer Multimediakonferenzschnittstelle.

15. Verfahren nach Anspruch 1, weiter umfassend:
Anzeigen einer Hinzufügungsaufforderungsinformation als Reaktion auf das Bestimmen, dass während der Multimediakonferenz ein gemeinsam nutzbarer Inhalt neu hinzugefügt wurde; und/oder
Erzeugen einer Hinzufügungsaufforderungssteuerung als Reaktion auf das Bestimmen, dass während der Multimediakonferenz ein gemeinsam nutzbarer Inhalt neu hinzugefügt wurde, und Anzeigen der Hinzufügungsaufforderungssteuerung; und
Anzeigen des neu hinzugefügten gemeinsam nutzbaren Inhalts als Reaktion auf das Erfassen einer Auslöseoperation auf der Hinzufügungsaufforderungssteuerung; und/oder
Stoppen des Anzeigens des angezeigten gemeinsam nutzbaren Inhalts als Reaktion auf das Bestimmen, dass ein gemeinsam nutzbarer Inhalt in einem Anzeigebereich für gemeinsam nutzbaren Inhalt angezeigt wird, und als Reaktion auf das Erfassen einer Auswahloperation an den mindestens zwei Kennungen für gemeinsam nutzbaren Inhalt; und
Anzeigen des gemeinsam nutzbaren Zielinhalts in dem Anzeigebereich für gemeinsam nutzbaren Inhalt; und/oder
Anzeigen einer Steuerung zum Erheben einer Kennung für gemeinsam nutzbaren Inhalt als Reaktion auf das Bestimmen, dass die Anzahl gemeinsam nutzbarer Inhalte der Multimediakonferenz größer als ein voreingestellter zweiter Zahlenschwellenwert ist, wobei die Steuerung zur Erhebung einer Kennung für gemeinsam nutzbaren Inhalt verwendet wird, um eine Kennung für gemeinsam nutzbaren Inhalt zu erheben, der aktuell nicht angezeigt wird; und/oder
Bestimmen einer Operationsautorisierung eines Teilnehmers der Multimediakonferenz bezüglich des gemeinsam nutzbaren Zielinhalts basierend auf Operationsautorisierungsinformationen, die von einem Freigeber des gemeinsam nutzbaren Zielinhalts festgelegt werden, nachdem die Multimediakonferenz beendet ist.

16. Verfahren nach Anspruch 1, wobei ein gemeinsam nutzbarer Inhalt der Multimediakonferenz von mindestens einem Teilnehmer während der Multimediakonferenz initiiert wird; und/oder
wobei das Anzeigen von mindestens zwei Kennungen für gemeinsam nutzbaren Inhalt der Multimediakonferenz Folgendes umfasst:
Anzeigen der Kennungen für gemeinsam nutzbaren Inhalt als Reaktion auf das Bestimmen, dass die Anzahl gemeinsam nutzbarer Inhalte der Multimediakonferenz größer als ein voreingestellter erster Zahlenschwellenwert ist.

17. Interaktionsvorrichtung, die auf einen Client eines Teilnehmers einer Multimediakonferenz angewendet wird, wobei die Interaktionsvorrichtung Folgendes umfasst:
mindestens einen Prozessor; und
mindestens einen Speicher, der kommunikativ mit dem mindestens einen Prozessor verbunden ist und Anweisungen speichert, die bei Ausführung durch den mindestens einen Prozessor die Vorrichtung veranlassen zum: Anzeigen von mindestens zwei Kennungen für gemeinsam nutzbaren Inhalt der Multimediakonferenz, wobei die mindestens zwei Kennungen für gemeinsam nutzbaren Inhalt jeweils einen von einem Teilnehmer an der Multimediakonferenz während der Multimediakonferenz gemeinsam genutzten Inhalt angeben;
Bestimmen einer Kennung für gemeinsam nutzbaren Zielinhalt aus den mindestens zwei Kennungen für gemeinsam nutzbaren Inhalt basierend auf einer Auswahloperation an den mindestens zwei Kennungen für gemeinsam nutzbaren Inhalt; und
Anzeigen eines durch die Kennung für gemeinsam nutzbaren Zielinhalt angegebenen gemeinsam nutzbaren Zielinhalts;
Anzeigen eines anderen gemeinsam nutzbaren Inhalts als Reaktion auf eine Auswahloperation oder Umschaltoperation des Teilnehmers an der Multimediakonferenz unter den mindestens zwei gemeinsam nutzbaren Inhalten;
wobei der von dem Teilnehmer an der Multimediakonferenz durchsuchte gemeinsam nutzbare Inhalt der gemeinsam nutzbare Inhalt ist, der aktuell in der Multimediakonferenz präsentiert wird, oder der von dem Teilnehmer an der Multimediakonferenz durchsuchte gemeinsam nutzbare Inhalt nicht der gemeinsam nutzbare Inhalt ist, der aktuell in der Multimediakonferenz präsentiert wird;
Hinzufügen eines neuen Anzeigebereichs für gemeinsam nutzbaren Inhalt als Reaktion auf das Bestimmen, dass ein gemeinsam nutzbarer Inhalt in einem Anzeigebereich für gemeinsam nutzbaren Inhalt angezeigt wird, und Anzeigen des gemeinsam nutzbaren Zielinhalts in dem neuen Anzeigebereich für gemeinsam nutzbaren Inhalt als Reaktion auf das Erfassen einer Auswahloperation an einer Kennung für gemeinsam nutzbaren Inhalt.

18. Computerlesbares nichtflüchtiges Medium, das auf einem Client eines Teilnehmers einer Multimediakonferenz angewendet wird, wobei das computerlesbare nichtflüchtige Medium ein darauf gespeichertes Computerprogramm umfasst, wobei das Programm, wenn es von einem Computer ausgeführt wird, den Computer veranlasst zum
Anzeigen von mindestens zwei Kennungen für gemeinsam nutzbaren Inhalt der Multimediakonferenz, wobei die mindestens zwei Kennungen für gemeinsam nutzbaren Inhalt jeweils einen von einem Teilnehmer an der Multimediakonferenz während der Multimediakonferenz gemeinsam genutzten Inhalt angeben;
Bestimmen einer Kennung für gemeinsam nutzbaren Zielinhalt aus den mindestens zwei Kennungen für gemeinsam nutzbaren Inhalt basierend auf einer Auswahloperation an den mindestens zwei Kennungen für gemeinsam nutzbaren Inhalt; und
Anzeigen eines durch die Kennung für gemeinsam nutzbaren Zielinhalt angegebenen gemeinsam nutzbaren Zielinhalts;
Anzeigen eines anderen gemeinsam nutzbaren Inhalts als Reaktion auf eine Auswahloperation oder Umschaltoperation des Teilnehmers an der Multimediakonferenz unter den mindestens zwei gemeinsam nutzbaren Inhalten;
wobei der von dem Teilnehmer an der Multimediakonferenz durchsuchte gemeinsam nutzbare Inhalt der gemeinsam nutzbare Inhalt ist, der aktuell in der Multimediakonferenz präsentiert wird, oder der von dem Teilnehmer an der Multimediakonferenz durchsuchte gemeinsam nutzbare Inhalt nicht der gemeinsam nutzbare Inhalt ist, der aktuell in der Multimediakonferenz präsentiert wird;
Hinzufügen eines neuen Anzeigebereichs für gemeinsam nutzbaren Inhalt als Reaktion auf das Bestimmen, dass ein gemeinsam nutzbarer Inhalt in einem Anzeigebereich für gemeinsam nutzbaren Inhalt angezeigt wird, und als Reaktion auf das Erfassen einer Auswahloperation an Kennungen für gemeinsam nutzbaren Inhalt, und Anzeigen des gemeinsam nutzbaren Zielinhalts in dem neuen Anzeigebereich für gemeinsam nutzbaren Inhalt.

## Revendications

1. Procédé d'interaction, appliqué à un client d'un participant à une conférence multimédia, le procédé comprenant :
l'affichage d'au moins deux identifiants de contenu pouvant être partagé d'une conférence multimédia, dans lequel les au moins deux identifiants de contenu pouvant être partagé indiquant chacun un contenu qui pourrait être partagé par un participant à la conférence multimédia pendant la conférence multimédia ;
la détermination, sur la base d'une opération de sélection sur les au moins deux identifiants de contenu pouvant être partagé, d'un identifiant de contenu pouvant être partagé cible parmi les au moins deux identifiants de contenu pouvant être partagé ; et
l'affichage d'un contenu pouvant être partagé cible indiqué par l'identifiant de contenu pouvant être partagé cible ;
l'affichage d'un autre contenu pouvant être partagé à la suite d'une opération de sélection ou d'une opération de commutation du participant à la conférence multimédia parmi les au moins deux contenus pouvant être partagés ;
le contenu pouvant être partagé qui est consulté par le participant à la conférence multimédia, est le contenu pouvant être partagé actuellement présenté dans la conférence multimédia ou le contenu pouvant être partagé qui est consulté par le participant à la conférence multimédia n'est pas le contenu pouvant être partagé qui est actuellement présenté dans la conférence multimédia ;
l'ajout d'une nouvelle zone d'affichage de contenu pouvant être partagé à la suite de la détermination qu'un contenu pouvant être partagé est affiché dans une zone d'affichage de contenu pouvant être partagé, et
à la suite de la détection d'une opération de sélection sur un identifiant de contenu pouvant être partagé, l'affichage du contenu pouvant être partagé cible dans la nouvelle zone d'affichage de contenu pouvant être partagé.

2. Procédé selon la revendication 1, dans lequel un contenu pouvant être partagé indiqué par chacun des au moins deux identifiants de contenu pouvant être partagé comprend un fichier en nuage stocké dans un espace de stockage en nuage.

3. Procédé selon la revendication 2, dans lequel le fichier en nuage comprend un fichier téléchargé depuis un terminal local du participant vers l'espace de stockage en nuage par le participant pendant la conférence multimédia.

4. Procédé selon la revendication 1, comprenant en outre :
l'affichage, sur la base d'une autorisation cible d'un participant cible dans la conférence multimédia, d'une commande d'opération correspondant à l'autorisation cible sur une interface du participant cible, dans lequel le participant cible est un participant qui exécute l'opération de sélection.

5. Procédé selon la revendication 4, dans lequel l'autorisation cible est déterminée en :
déterminant, à partir d'autorisations de la conférence multimédia, une autorisation correspondant aux informations d'identifiant en tant qu'autorisation cible, sur la base des informations d'identifiant du participant cible.

6. Procédé selon la revendication 4, comprenant en outre :
la détermination, à la suite de l'autorisation cible comprenant une autorisation de présentation de conférence, du contenu pouvant être partagé cible en tant que contenu de présentation actuel de la conférence multimédia, dans lequel l'autorisation de présentation de conférence est une autorisation de commande sur le contenu de présentation actuel de la conférence multimédia.

7. Procédé selon la revendication 6, comprenant en outre :
l'affichage, à la suite de l'autorisation cible comprenant l'autorisation de présentation de conférence et à la suite de la détermination qu'il y a un participant dans un mode de suivi dans la conférence multimédia, du contenu de présentation actuel sur une interface du participant dans le mode de suivi, dans lequel le contenu de présentation actuel est au moins partiellement identique à un contenu présenté par un objet de présentation actuel.

8. Procédé selon la revendication 4, dans lequel des autorisations de la conférence multimédia comprennent une autorisation de présentation de conférence ; et
un contenu de présentation actuel de la conférence multimédia est affiché en :
affichant, dans un cas où l'autorisation cible ne comprend pas l'autorisation de présentation de conférence, le contenu pouvant être partagé cible indiqué par l'identifiant de contenu pouvant être partagé cible sélectionné par le participant cible, dans lequel le contenu pouvant être partagé cible indiqué par l'identifiant de contenu pouvant être partagé cible sélectionné par le participant cible ne s'affiche pas sur l'interface du participant.

9. Procédé selon la revendication 4, comprenant en outre :
l'affichage, à la suite de la détection d'une opération de déclenchement sur la commande d'invite de contenu de présentation actuel, du contenu de présentation actuel de la conférence multimédia ;
dans lequel l'affichage du contenu de présentation actuel de la conférence multimédia comprend :
l'affichage du contenu de présentation actuel de la conférence multimédia dans un mode d'affichage cible, dans lequel le mode d'affichage cible est l'un d'un mode de navigation libre et d'un mode de suivi et dans lequel le mode de navigation libre indique l'affichage du contenu de présentation actuel de la conférence multimédia sous la commande du participant cible, le mode de suivi indique que le contenu de présentation actuel est au moins partiellement identique à un contenu présenté par un objet de présentation actuel.

10. Procédé selon la revendication 4, dans lequel des autorisations de la conférence multimédia comprennent une autorisation de présentation de conférence, et le procédé comprend en outre :
l'affichage d'une commande d'invite de contenu de présentation actuel dans un cas où l'autorisation cible ne comprend pas l'autorisation de présentation de conférence.

11. Procédé selon la revendication 4, dans lequel l'affichage, sur la base d'une autorisation cible d'un participant cible à la conférence multimédia, d'une commande d'opération correspondant à l'autorisation cible sur une interface du participant cible comprend :
l'affichage d'une commande de transfert d'autorisation de présentation de conférence sur la base de l'autorisation cible comprenant une autorisation de présentation de conférence, et
le procédé comprend en outre :
l'envoi, à la suite d'une détection d'une opération de déclenchement sur la commande de transfert d'autorisation de présentation de conférence, d'une notification de transfert d'autorisation de présentation de conférence comprenant un identifiant d'objet de transfert spécifié par le participant cible à un serveur sur la base de l'identifiant d'objet de transfert.

12. Procédé selon la revendication 4, dans lequel l'affichage, sur la base d'une autorisation cible d'un participant cible à la conférence multimédia, d'une commande d'opération correspondant à l'autorisation cible sur une interface du participant cible comprend :
l'affichage, sur la base de l'autorisation cible comprenant une autorisation de partageur, d'au moins l'une d'une commande d'édition et d'une commande de modification d'autorisation d'édition pour le contenu pouvant être partagé cible, dans lequel l'autorisation de partageur comprend au moins l'une d'une autorisation d'édition et d'une autorisation de modification d'autorisation d'édition ;
le procédé comprenant en outre :
la génération, à la suite de la détection d'une opération de déclenchement sur le contrôle de modification d'autorisation d'édition, d'informations d'autorisation d'édition sur le contenu pouvant être partagé sur la base d'une autorisation d'édition modifiée.

13. Procédé selon la revendication 4, dans lequel des autorisations de la conférence multimédia comprennent une autorisation de partageur et le procédé comprend en outre :
la détermination, à la suite d'une détermination que l'autorisation cible ne comprend pas l'autorisation de partageur, d'une autorisation d'édition du participant cible sur le contenu pouvant être partagé cible sur la base d'informations d'autorisation d'édition déterminées par un partageur du contenu pouvant être partagé cible, dans lequel l'autorisation de partageur comprend au moins l'une d'une autorisation d'édition et d'une autorisation de modification d'autorisation d'édition.

14. Procédé selon la revendication 1, dans lequel l'affichage d'un contenu pouvant être partagé cible indiqué par l'identifiant de contenu pouvant être partagé cible comprend :
l'affichage du contenu pouvant être partagé cible indiqué par l'identifiant de contenu pouvant être partagé cible sur une interface de conférence multimédia.

15. Procédé selon la revendication 1, comprenant en outre :
l'affichage, à la suite d'une détermination qu'un contenu pouvant être partagé est nouvellement ajouté pendant la conférence multimédia, d'une information d'invite d'ajout ; et/ou,
la génération d'une commande d'invite d'ajout à la suite d'une détermination qu'un contenu pouvant être partagé est nouvellement ajouté pendant la conférence multimédia, et l'affichage de la commande d'invite d'ajout ; et
l'affichage du contenu pouvant être partagé nouvellement ajouté à la suite d'une détection d'une opération de déclenchement sur la commande d'invite d'ajout ; et/ou,
l'arrêt, à la suite d'une détermination qu'un contenu pouvant être partagé est affiché dans une zone d'affichage de contenu pouvant être partagé et à la suite d'une détection d'une opération de sélection sur les au moins deux identifiants de contenu pouvant être partagé, d'afficher le contenu pouvant être partagé qui est affiché ; et
l'affichage du contenu pouvant être partagé cible dans la zone d'affichage de contenu pouvant être partagé ; et/ou,
l'affichage d'une commande d'acquisition d'identifiant de contenu pouvant être partagé à la suite d'une détermination que le nombre de contenus pouvant être partagés de la conférence multimédia est plus grand qu'un second seuil de nombre prédéfini, dans lequel la commande d'acquisition d'identifiant de contenu pouvant être partagé est utilisée pour acquérir un identifiant de contenu pouvant être partagé qui n'est pas affiché actuellement ; et/ou,
la détermination, sur la base d'informations d'autorisation d'opération définies par un partageur du contenu pouvant être partagé cible, d'une autorisation d'opération d'un participant à la conférence multimédia sur le contenu pouvant être partagé cible après que la conférence multimédia se termine.

16. Procédé selon la revendication 1, dans lequel un contenu pouvant être partagé de la conférence multimédia est initié par au moins un participant pendant la conférence multimédia ; et/ou,
dans lequel l'affichage d'au moins deux identifiants de contenu pouvant être partagé de la conférence multimédia comprend :
l'affichage des identifiants de contenu pouvant être partagé à la suite d'une détermination que le nombre de contenus pouvant être partagés de la conférence multimédia est plus grand qu'un premier seuil de nombre prédéfini.

17. Dispositif d'interaction, appliqué à un client d'un participant à une conférence multimédia, le dispositif d'interaction comprenant :
au moins un processeur ; et
au moins une mémoire couplée en communication à le au moins un processeur et stockant des instructions qui, lors d'une exécution par le au moins un processeur, amènent le dispositif à : afficher au moins deux identifiants de contenu pouvant être partagé de la conférence multimédia, dans lequel les au moins deux identifiants de contenu pouvant être partagé indiquent chacun un contenu partagé par un participant à la conférence multimédia pendant la conférence multimédia ;
la détermination, sur la base d'une opération de sélection sur les au moins deux identifiants de contenu pouvant être partagé, d'un identifiant de contenu pouvant être partagé cible parmi les au moins deux identifiants de contenu pouvant être partagé ; et
l'affichage d'un contenu pouvant être partagé cible indiqué par l'identifiant de contenu pouvant être partagé cible ;
l'affichage d'un autre contenu pouvant être partagé à la suite d'une opération de sélection ou d'une opération de commutation du participant à la conférence multimédia parmi les au moins deux contenus pouvant être partagés ;
le contenu pouvant être partagé qui est consulté par le participant à la conférence multimédia, est le contenu pouvant être partagé actuellement présenté dans la conférence multimédia ou le contenu pouvant être partagé qui est consulté par le participant à la conférence multimédia n'est pas le contenu pouvant être partagé qui est actuellement présenté dans la conférence multimédia ;
l'ajout d'une nouvelle zone d'affichage de contenu pouvant être partagé à la suite d'une détermination qu'un contenu pouvant être partagé est affiché dans une zone d'affichage de contenu pouvant être partagé, et la suite d'une détection d'une opération de sélection sur un identifiant de contenu pouvant être partagé, afficher le contenu pouvant être partagé cible dans la nouvelle zone d'affichage de contenu pouvant être partagé.

18. Support non transitoire lisible par ordinateur, appliqué à un client d'un participant à une conférence multimédia, le support non transitoire lisible par ordinateur comprenant un programme informatique stocké sur celui-ci, dans lequel le programme, lorsqu'il est exécuté par un ordinateur, amène l'ordinateur à
afficher au moins deux identifiants de contenu pouvant être partagé de la conférence multimédia, dans lequel les au moins deux identifiants de contenu pouvant être partagé indiquent chacun un contenu partagé par un participant à la conférence multimédia pendant la conférence multimédia ;
déterminer, sur la base d'une opération de sélection sur les au moins deux identifiants de contenu pouvant être partagé, un identifiant de contenu pouvant être partagé cible parmi les au moins deux identifiants de contenu pouvant être partagé ; et
afficher un contenu pouvant être partagé cible indiqué par l'identifiant de contenu pouvant être partagé cible ;
afficher un autre contenu pouvant être partagé à la suite d'une opération de sélection ou d'une opération de commutation du participant à la conférence multimédia parmi les au moins deux contenus pouvant être partagés ;
le contenu pouvant être partagé qui est consulté par le participant à la conférence multimédia, est le contenu pouvant être partagé actuellement présenté dans la conférence multimédia ou le contenu pouvant être partagé qui est consulté par le participant à la conférence multimédia n'est pas le contenu pouvant être partagé qui est actuellement présenté dans la conférence multimédia ;
ajouter une nouvelle zone d'affichage de contenu pouvant être partagé à la suite d'une détermination qu'un contenu pouvant être partagé est affiché dans une zone d'affichage de contenu pouvant être partagé et à la suite d'une détection d'une opération de sélection sur des identifiants de contenu pouvant être partagé, et afficher le contenu pouvant être partagé cible dans la nouvelle zone d'affichage de contenu pouvant être partagé.
